# EUROPEAN PATENT APPLICATION

(11) **EP 4 102 229 A1**
(43) Date of publication of application: **14.12.2022**
(21) Application number: 21751305.0
(22) Date of filing: 19.01.2021
(51) Int. Cl.: G01N 35/00

(54) **AUTOMATED ANALYZER**

(30) Priority: 05.02.2020 JP 2020018348
(71) Applicant: Hitachi High-Tech Corporation, Minato-ku Tokyo 105-6409 (JP)
(72) Inventor: OTA Shintaro, Tokyo 105-6409 (JP); MATSUMOTO Osamu, Tokyo 105-6409 (JP); SHIMIZU Kanoh, Tokyo 105-6409 (JP)
(74) Representative: Strehl Schübel-Hopf & Partner
(86) International application number: PCT/JP2021/001613
(87) International publication number: WO 2021/157333

(57) **Abstract**

An automatic analyzer includes a control unit 7d that, when an accuracy control sample is put in after input of a standard sample, requests measurement of the input accuracy control sample on the same measurement item as a requested measurement item for the standard sample; and a selection screen 201 or 501 that enables selection of measurement timing of the accuracy control sample on the same item as the requested measurement item for the standard sample. The control unit 7d starts measurement of the accuracy control sample when the timing selected on the selection screen 201 or 501 is reached. This reduces consumption of the standard sample and reagent as compared with before and provides an automatic analyzer that can improve analysis throughput.

## Description

### Technical Field

The present invention relates to an automatic analyzer that makes qualitative and quantitative analysis of a biological sample such as serum or urine (hereinafter called a specimen).

### Background Art

As an example of an automatic analyzer that reduces the working time to force the operator to work inefficiently and avoids wasting of the reagent, Patent Literature 1 describes that the automatic analyzer includes a control judgement unit that, when a standard sample or accuracy control sample is analyzed, decides whether or not the analysis result is abnormal, and if the analysis result is decided to be abnormal, stops analysis of the accuracy control sample or specimen.

### Citation List

### Patent Literature

Patent Literature 1: Japanese Unexamined Patent Application Publication No. 5010-133870

### Summary of Invention

### Technical Problem

In an automatic analyzer such as an automatic biochemical analyzer or automatic immunoanalytical device, a special reagent registered for each analysis item is used.

For the analysis item, the physical properties of a specimen with a known concentration (standard specimen/calibrator), such as absorbance and intensity of scattering light, are measured in advance using a previously registered reagent and calibration curve data that represents the relation between concentrations and measured values is created. Then, the concentration of the patient specimen is calculated according to analysis parameters such as the created calibration curve data, preset analysis conditions and so on.

In an existing automatic analyzer, when an accuracy control sample is put in after a standard sample for creating calibration curve data is put in, a request for measurement on the same item as the requested item for the standard sample is also automatically generated for the accuracy control sample and the standard sample and accuracy control sample are measured.

Generally, the standard sample is a specimen that is supplied together with a clinical reagent by the supplier of the clinical reagent. The accuracy control sample is a specimen for which the allowable concentration is previously indicated. If the analyzer is properly calibrated with an adequate standard sample, the output signal level can be predicted. Accuracy control is intended to confirm the probability of the analyzer on the basis of the measurement result of the standard sample.

When, as in the past, regardless of the measurement circumstances and measurement result of the standard sample, a request for measurement of an accuracy control sample is automatically generated to make a measurement before output of the measurement result of the standard sample, if measurement of the standard sample is failed, accuracy control cannot be performed using the failed measurement result which is invalid. If so, it is necessary to measure the standard sample again and confirm that the measurement is successful before measurement for accuracy control is made again. This poses the problem that the accuracy control sample and reagent are wasted.

A request for measurement of the accuracy control sample is automatically generated only on the requested item for the reagent to be used and the standard sample. Therefore, regarding the reagent that is frequently used for measurement, the reagent inherited with the accuracy control sample must be measured as soon as the reagent is exhausted.

Here, regarding the copy calibration item, a request for measurement of a standard sample is not generated and thus a request for an accuracy control sample is not automatically generated. Copy Calibration is a mechanism in which the measurement result of the standard sample on the item for which measurement can be made with a given reagent can also be used on another item for which measurement can be made with the reagent used for the measurement.

When the operator judges the measurement result of the standard sample, the operator must wait for output of the measurement result of the standard sample and check the measurement result before requesting measurement of an accuracy control sample. Thus, the operator cannot put the accuracy control sample into the analyzer successively after the standard sample, thereby posing the problem that the operator's working time is lengthened.

Also, since the accuracy control sample is measured after a decision is made as to whether or not the measurement result of the standard sample is acceptable, another problem is that the time taken until output of the measurement result of the accuracy control sample is long.

As a solution to this, according to the technique described in Patent Literature 1, regarding measurement of the standard sample and accuracy control sample, a decision is made according to whether or not there is a mechanical operation failure or whether or not the measurement result is acceptable, and if successful, the accuracy control sample and specimen are measured. However, in this technique, if measurement of the standard sample is not successful, analysis operation is stopped until the problem is solved, thereby posing the problem that throughput must be improved.

In addition, as in the abovementioned case, the technique has a problem that it takes a long time to obtain a result.

The present invention provides an automatic analyzer that can reduce the consumption of standard samples and reagents as compared with before and improve analysis throughput.

### Solution to Problem

The present invention includes a plurality of means to solve the above problem and one example of them is an automatic analyzer that analyzes a specimen. The automatic analyzer is characterized by comprising: an analysis unit that analyzes the specimen; a control unit that controls operation of various devices in the analyzer including the analysis unit and when an accuracy control sample is put in after input of a standard sample, requests measurement of the input accuracy control sample on the same measurement item as a requested measurement item for the standard sample; and a selection unit that enables selection of measurement timing of the accuracy control sample on the same item as the requested measurement item for the standard sample, in which the control unit starts measurement of the accuracy control sample when the timing selected by the selection unit is reached.

### Advantageous Effects of Invention

According to the present invention, it is possible to reduce the consumption of standard samples and reagents as compared with before and improve analysis throughput. The other issues, constituent elements and effects will become apparent from the description of an embodiment given below.

### Brief Description of Drawings

Fig. 1 is a view that shows an example of the configuration of an automatic analyzer according to an embodiment of the present invention.
Fig. 2 is a view that shows a measurement timing setting screen for the accuracy control sample in the automatic analyzer according to the embodiment.
Fig. 3 is a chart that shows an example of the flow to decide whether or not to measure the accuracy control sample according to the measurement result of the standard sample in the automatic analyzer according to the embodiment.
Fig. 4 is a chart that shows an example of the flow to decide whether or not to measure the accuracy control sample, according to the measurement result of the standard sample in the automatic analyzer according to the embodiment.
Fig. 5 is a view that shows an example of the measurement timing setting screen for the accuracy control sample in the automatic analyzer according to the embodiment.
Fig. 6 is a view that shows an example of the flow to decide whether or not to measure the accuracy control sample, according to the standard sample measurement circumstances in the automatic analyzer according to the embodiment.
Fig. 7 is a view that shows an example of the flow to automatically generate a request when the accuracy control sample is put in, in the automatic analyzer according to the embodiment.
Fig. 8 is a view that shows an example of the temporary waiting area setting screen for the accuracy control sample in the automatic analyzer according to the embodiment.
Fig. 9 is a view that shows an example of the accuracy control requirement setting screen for the destination of inheritance in the automatic analyzer according to the embodiment.
Fig. 10 is a view that shows an example of the accuracy control requirement setting screen for the destination of copy calibration in the automatic analyzer according to the embodiment.

### Description of Embodiments

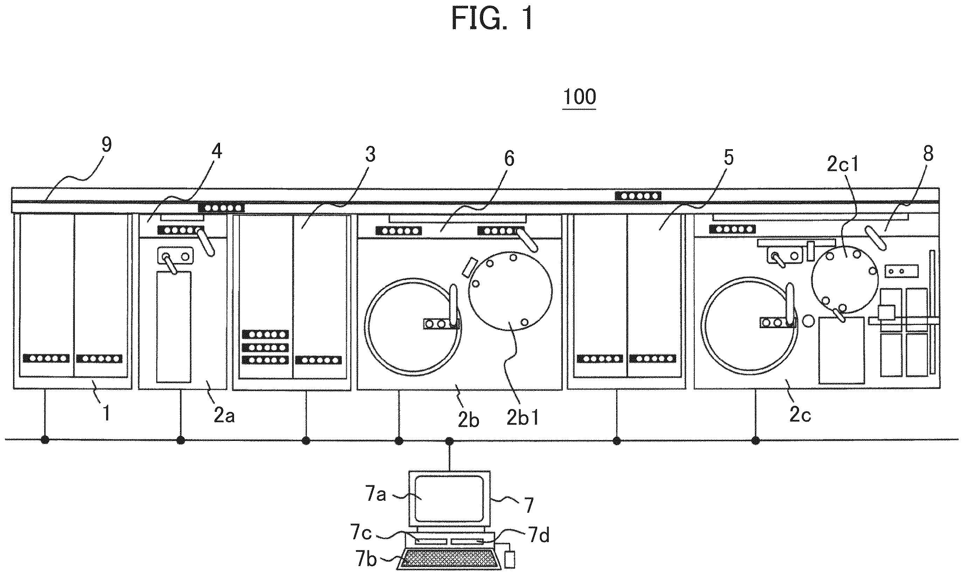

Hereinafter, an automatic analyzer according to an embodiment of the present invention will be described referring to Fig. 1 to Fig. 10.

First, the automatic analyzer is summarized referring to Fig. 1. Fig. 1 is a view that schematically shows the general configuration of the automatic analyzer according to the present invention.

The automatic analyzer 100 shown in Fig. 1 includes a loading/unloading unit 1, an ISE (Ion Selective Electrode) analysis unit 2a, a biochemical analysis unit 2b, an immunoanalytical unit 2c, a transport line 9, rack temporary storage units 3 and 5, and an operation unit PC 7.

The loading/unloading unit 1 is a unit that supplies a rack for supplying a specimen to the analysis units 2a, 2b, and 2c which will be explained later and includes a mechanism to detect input of a rack and a mechanism to identify the type of the specimen placed in the input rack. For example, if the rack bears an information storage medium such as a barcode or RFID, the time when the rack has been put in, the type of the rack, and the type of the specimen placed in the rack are identified by providing a reading means to read the information storage medium.

The analysis units 2a, 2b, and 2c that analyze a specimen are located along the transport line 9 and include dispensing lines 4, 6, and 8 to transport the rack for dispensing, respectively.

The ISE analysis unit 2a is an analysis unit that measures the electrolyte concentration of the specimen using an ion selective electrode.

The biochemical analysis unit 2b is an analysis unit that analyzes the biochemical component of the specimen by mixing the specimen and reagent in a reaction container (not shown) placed on a reaction disk 2b1, making them react with each other and measuring the absorbance of the reaction liquid with a photometer.

The immunoanalytical unit 2c is an analysis unit that makes sensitive analysis of a minor component in blood such as a hormone in the specimen by mixing the specimen and reagent in a reaction container (not shown) placed on an incubator 2c1 and making them react with each other.

The structures of these analysis units 2a, 2b, and 2c are not limited and a known structure may be adopted.

The transport line 9 includes a transport belt and a motor and supplies the rack put in the loading/unloading unit 1 to the analysis unit 2a, 2b, or 2c according to an analysis request. It also transports the rack housing the specimen of which analysis has been ended in the analysis unit 2a, 2b, or 2c, to the rack temporary storage unit 3 or 5 or transports the rack housing the specimen of which analysis has not been requested, to the loading/unloading unit 1. The transport line 9 is not limited to the belt type, but it may be a transport device that uses any of various methods such as an electromagnetic transport system.

The rack temporary storage units 3 and 5 are line mechanisms that temporarily hold a rack in which not only an ordinary specimen but also a standard sample and an accuracy control sample are loaded, and the rack is transported to the analysis unit 2a, 2b, or 2c or the loading/unloading unit 1. Their detailed structure is not limited and they may have any structure provided that they can house a plurality of specimens and are randomly accessible. For example, they may be a disk type temporary storage unit that can house a plurality of racks or may be a temporary storage unit that houses a plurality of racks in each of several lines on which a rack is placed, and from which a desired rack is unloaded.

The operation unit PC 7 is a control device for overall management that controls operation of the abovementioned various units and is a computer that includes a monitor 7a, an input device 7b, a storage medium 7c, a control unit 7d and so on. The operation unit PC 7 is connected to a printer (not shown), a host system (not shown) in an inspection room, hospital or the like, and a maker's external management server (not shown) and the like.

The monitor 7a is a display device, such as a liquid crystal display, that displays a screen to enter various parameters and settings and shows many types of information including analysis inspection data on initial inspection and reinspection, and measurement results. Alternatively, it may be a touch panel type display device that also functions as the input device 7b which will be described later.

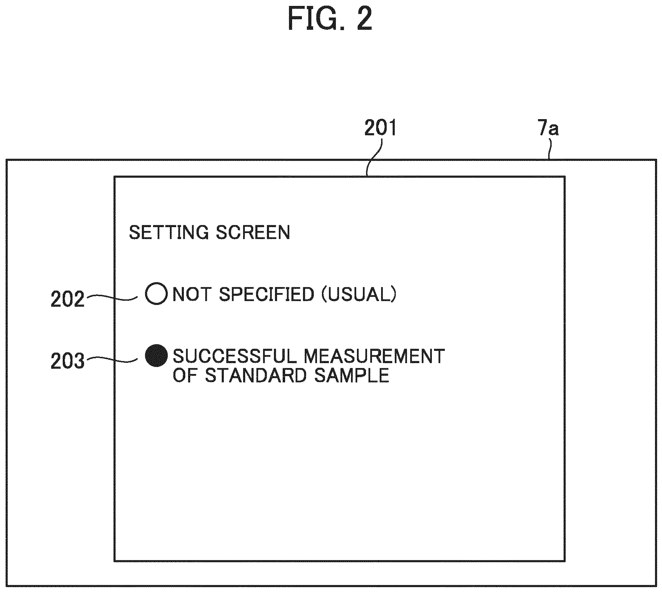

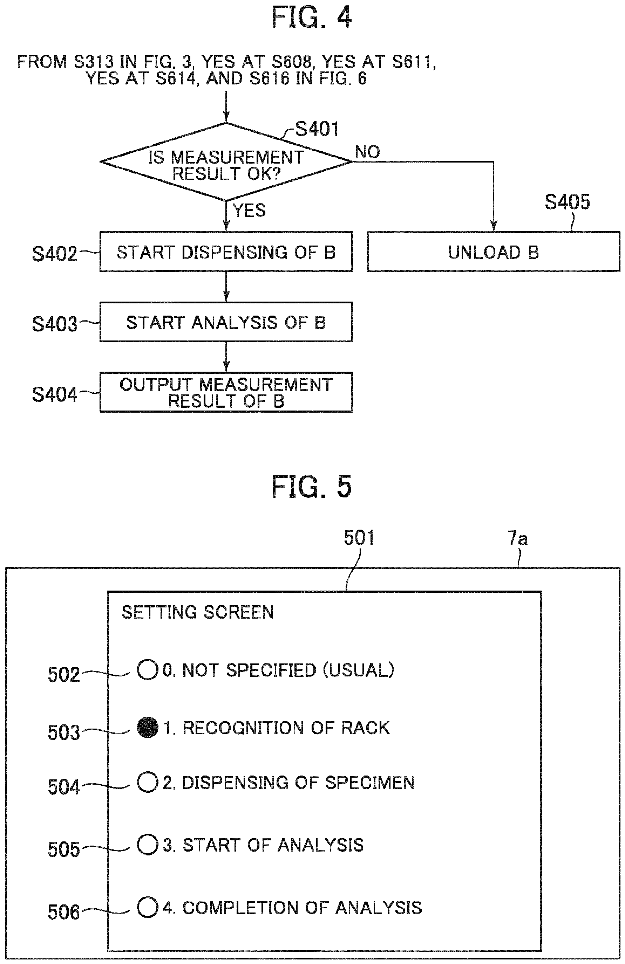

The monitor 7a in this embodiment displays a selection screen 201 or 501 (see Fig. 2 or Fig. 5) that enables selection of the timing to measure the accuracy control sample on the same item as the requested measurement item for the standard sample. The selection screens 201 and 501 will be detailed later.

The input device 7b includes a keyboard and a mouse that are used to enter various parameters and settings, analysis request information, instructions such as an analysis start instruction and so on.

The storage medium 7c is a storage medium such as a semiconductor memory like a flash memory or a magnetic disk such as an HDD that records attribute information on the specimen put in the automatic analyzer 100 (specimen ID, reception number, patient name, requested analysis item, etc.), specimen measurement results and so on. The storage medium 7c records various parameters and set values to control operation of the various devices in the automatic analyzer 100, various computer programs to perform the various processes, etc. which will be explained later, and so on.

The control unit 7d is a unit that controls the overall operation of the automatic analyzer 100 including the analysis units 2a, 2b, and 2c, transport line 9 and rack temporary storage units 3 and 5 and comprises a CPU and so on.

In this embodiment, when an accuracy control sample is put in after input of a standard sample, the control unit 7d also requests measurement of the input accuracy control sample on the same measurement item as the requested measurement item for the standard sample. The control unit 7d performs control to start measurement of the accuracy control sample when the timing selected on the selection screen 201 or 501 is reached. A detailed explanation will be given later.

The configuration of the automatic analyzer 100 is as described above.

The automatic analyzer 100 shown in Fig. 1 has a configuration including a total of three modules, namely one ISE analysis unit 2a, one biochemical analysis unit 2b, and one immunoanalytical unit 2c. However, it is just an example and the automatic analyzer to which the present invention is preferably applied has only to include at least one of the analysis units 2a, 2b and 2c and details of the configuration are not limited. It may include modules that perform various types of pretreatment and after-treatment as appropriate and the transport line 9 and the rack temporary storage units 3 and 5 may be omitted.

The specimen analysis process by the above automatic analyzer 100 is generally performed in the following order.

The user loads, on the loading/unloading unit 1, a rack holding a plurality of specimens to be analyzed by the automatic analyzer 100. After loading, the specimen identifying mechanism installed near the transport line 9 reads the information storage medium attached to the rack and specimens, such as a barcode, to recognize the rack.

The control unit 7d checks the information requested by the operation unit PC 7 and the specimen information on the rack and transports the rack set on the loading/unloading unit 1 to the dispensing line 4, 6 or 8 of one of the analysis units 2a, 2b, and 2c through the transport line 9 according to the analysis request assigned to the specimen concerned.

The analysis units 2a, 2b, and 2c aspirate the specimen from a specimen container on the supplied rack through a specimen probe and carry out the analysis steps. After all the analysis steps are ended, the rack is transported on the transport line 9 and housed in the rack temporary storage unit 3 or 5 or the loading/unloading unit 1.

The types of specimens that the analysis units 2a, 2b, and 2c of the automatic analyzer 100 analyze include a patient specimen, a standard sample, and an accuracy control sample.

The patient specimen is a specimen whose component concentration as an analysis item is unknown and the analysis units 2a, 2b, and 2c determine the component concentration in the patient specimen for the target analysis item.

The standard sample and accuracy control sample are specimens whose component concentrations for the analysis item are known. The standard sample is a specimen to calculate the calibration curve as a relation expression between the absorbance and amount of luminescence as measured by the photometer or analysis unit and the component concentration. The accuracy control sample is a specimen to perform condition management (accuracy control) for the analysis item or analyzer.

Next, referring to Fig. 2 to Fig. 4, an explanation will be given of details of the selection screen displayed on the monitor 7a in this embodiment to select the timing of measurement of the accuracy control sample on the same item as the requested measurement item for the standard sample and one example of the analysis control flow based on the result of selection.

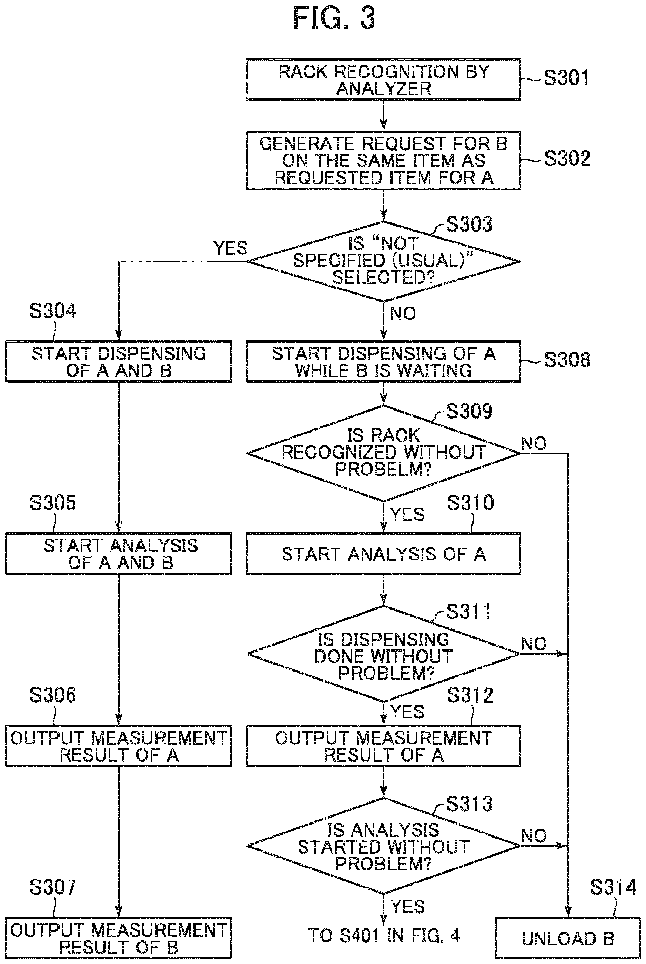

Fig. 2 is a view that shows an example of the measurement timing setting screen for the accuracy control sample and Fig. 3 and Fig. 4 are charts that shows an example of the flow to decide whether or not to measure the accuracy control sample according to the measurement result of the standard sample.

In this embodiment, the measurement timing for the accuracy control sample can be selected on the selection screen 201 displayed on the monitor 7a as shown in Fig. 2.

If the "NOT SPECIFIED" field 202 is selected in Fig. 2, the control unit 7d automatically generates a request to enable measurement of the accuracy control sample on the same item as the requested item for the standard sample when the accuracy control sample is put in while the standard sample under analysis or to be analyzed is present in the analyzer. Then, the control unit 7d transports the standard sample and accuracy control sample to the dispensing line 4, 6 or 8 of the analysis unit 2a, 2b or 2c to make measurement of the standard sample and accuracy control sample, and after completion of the measurement, outputs the measurement result of the accuracy control sample using the measurement result of the standard sample.

On the other hand, if the "SUCCESSFUL MEASUREMENT OF STANDARD SAMPLE" field 203 is selected in Fig. 2, the control unit 7d automatically generates a request to enable measurement of the accuracy control sample on the same item as the requested item for the standard sample when the accuracy control sample is put in while the standard sample under analysis or to be analyzed is present in the analyzer. Then, the control unit 7d transports only the standard sample to the dispensing line 4, 6 or 8 of the analysis unit 2a, 2b or 2c and temporarily keeps the accuracy control sample waiting in the rack temporary storage unit 3 or 5 until measurement of the standard sample is ended.

After that, when the measurement result of the standard sample is found to have no problem, the control unit 7d transports the rack loaded with the accuracy control sample from the rack temporary storage unit 3 or 5 to the dispensing line 4, 6 or 8 of the relevant analysis unit 2a, 2b or 2c and starts measurement of the accuracy control sample in the relevant analysis unit 2a, 2b or 2c.

On the other hand, if the measurement result of the standard sample is found to have a problem, the accuracy control sample temporarily waiting in the rack temporary storage unit 3 or 5 is transported to the loading/unloading unit 1 and taken out of the analyzer.

Next, referring to Fig. 3 and Fig. 4, an explanation will be given of the flow to decide whether or not to measure the accuracy control sample according to the standard sample measurement condition in the modes shown in Fig. 2. In Fig. 3, Fig. 4 and Fig. 6, "A" means a standard sample and "B" means an accuracy control sample.

As shown in Fig. 3, first, when the accuracy control sample is put in after input of the standard sample and the control unit 7d recognizes the racks in which they are loaded (Step S301), the control unit 7d automatically generates a request for measurement of the accuracy control sample on the same item as the requested item for the standard sample (Step S302) .

Then, the control unit 7d decides whether or not the "NOT SPECIFIED" field 202 is selected on the screen in Fig. 2 (S303).

If the "NOT SPECIFIED" field 202 is selected on the screen in Fig. 2, the process goes to Step S304 and the control unit 7d starts dispensing of the standard sample and accuracy control sample (Step S304). Consequently, analysis of the standard sample and accuracy control sample is started (Step S305). After that, the control unit 7d outputs the measurement result of the standard sample (Step S306) and outputs the measurement result of the accuracy control sample using the measurement result of the standard sample (S307).

On the other hand, if not the "NOT SPECIFIED" field 202 but the "SUCCESSFUL MEASUREMENT OF STANDARD SAMPLE" field 203 is selected on the screen in Fig. 2, the control unit 7d keeps the accuracy control sample waiting in the rack temporary storage unit 3 or 5.

Then, as dispensing of the standard sample is started (Step S308), the control unit 7d checks whether or not there is a problem in recognition of the rack for the standard sample (Step S309). For example, there may be a case that the required specimen for measurement of the standard specimen is not available on the rack.

If it is found at Step S309 that there is a problem, the accuracy control sample waiting in the rack temporary storage unit 3 or 5 is unloaded (Step S314) and the process is ended by notifying the monitor 7a, etc. of occurrence of the problem.

On the other hand, if it is found at Step S309 that there is no problem, the process goes to Step S310, and then as analysis of the standard sample is started (Step S310), the control unit 7d checks whether or not a problem has occurred during dispensing of the standard sample (Step S311). For example, there may be a case that the specimen amount of the standard sample is insufficient or the specimen amount is insufficient on another item requested for the standard sample.

If it is found at Step S311 that there is a problem, the accuracy control sample waiting in the rack temporary storage unit 3 or 5 is unloaded (Step S314) and the process is ended by notifying the monitor 7a, etc. of occurrence of the problem.

On the other hand, if it is found at Step S311 that there is no problem, the process goes to Step S312, and then as the analysis result is output (Step S312), the control unit 7d checks whether or not a problem has occurred at the start of analysis of the standard sample (Step S313). For example, there may be a case that the reagent or diluting fluid for use in measurement of the standard sample is insufficient or the amount of reagent becomes insufficient as the result of dispensing of the reagent.

If it is found at Step S313 that there is a problem, the accuracy control sample waiting in the rack temporary storage unit 3 or 5 is unloaded (Step S314) and the process is ended by notifying the monitor 7a, etc. of occurrence of the problem.

On the other hand, if it is found at Step S313 that there is no problem, the process goes to Step S401 in Fig. 4.

As shown in Fig. 4, after that, the control unit 7d checks whether or not the measurement result of the standard sample has a problem (Step S401). For example, a problem related to the standard sample may be that a calibration curve has not been created from the measurement result of the standard sample or that the created calibration curve is abnormal.

If it is found at Step S401 that there is a problem due to the problem related to the standard sample, the accuracy control sample waiting in the rack temporary storage unit 3 or 5 is unloaded (Step S405) and the process is ended by notifying the monitor 7a, etc. of occurrence of the problem.

On the other hand, if it is found at Step S401 that there is no problem, the process goes to Step S402, and then the control unit 7d performs dispensing of the accuracy control sample (Step S402) so that analysis of the accuracy control sample is started (Step S403).

After that, the control unit 7d outputs the measurement result of the accuracy control sample using the measurement result of the standard sample (Step S404) and ends the process.

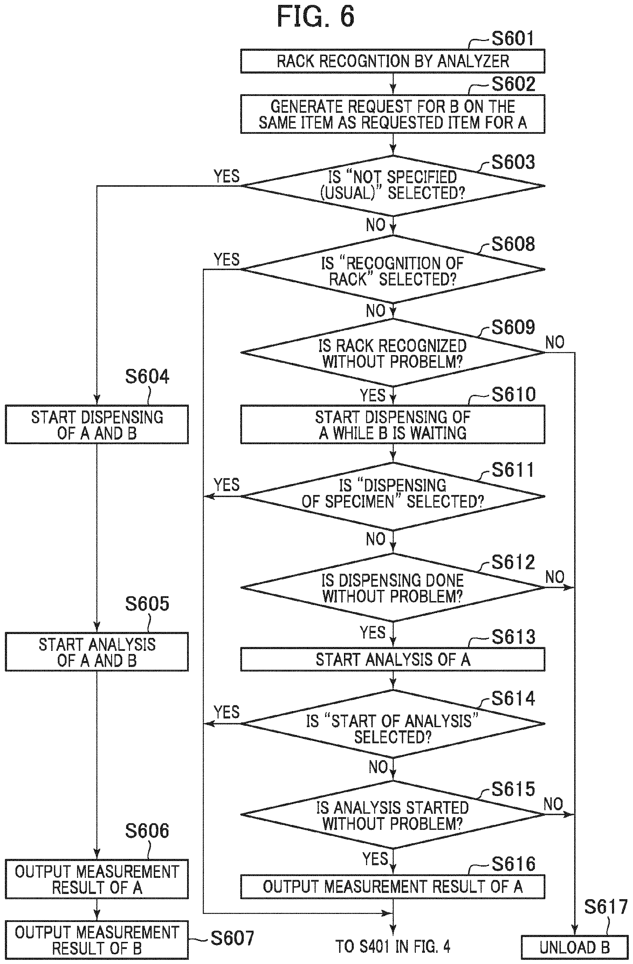

Next, referring to Fig. 5 and Fig. 6, an explanation will be given of details of another example of the selection screen displayed on the monitor 7a in this embodiment and details of the analysis control flow based on the result of selection. Fig. 5 is a view that shows an example of the measurement timing setting screen for the accuracy control sample and Fig. 6 is a view that shows an example of the flow to decide whether or not to measure the accuracy control sample, according to the standard sample measurement circumstances.

In this embodiment, the screen to select the measurement timing for the accuracy control sample may be a selection screen 501 as shown in Fig. 5 instead of the selection screen 201 shown in Fig. 2. The selection screen 501 shown in Fig. 5 enables selection among two or more timing options including the "START OF ANALYSIS" field 505, "DISPENSING OF SPECIMEN" field 504 and "RECOGNITION OF RACK" field 503, in addition to the "NOT SPECIFIED" field 502 as shown in Fig. 2 and "COMPLETION OF ANALYSIS" field 506.

If the "NOT SPECIFIED" field 502 is selected in Fig. 5, the same steps are taken as when the "NOT SPECIFIED" field 202 in Fig. 2 is selected. If the "COMPLETION OF ANALYSIS" field 506 is selected in Fig. 5, the same steps are taken as when the "SUCCESSFUL MEASUREMENT OF STANDARD SAMPLE" field 203 is selected in Fig. 2.

If the "RECOGNITION OF RACK" field 503 is selected in Fig. 5, the same steps are taken as when the "NOT SPECIFIED" field 502 is selected, in that a request to enable measurement of the accuracy control sample on the same item as the requested item for the standard sample is automatically generated. In this point, the same is true for the case that the "DISPENSING OF SPECIMEN" field 504 or the "START OF ANALYSIS" field 505 is selected as described below.

Then, the control unit 7d transports only the standard sample to the dispensing line 4, 6 or 8 of the analysis unit 2a, 2b or 2c and temporarily keeps the accuracy control sample waiting in the rack temporary storage unit 3 or 5 until recognition of the rack for the standard sample is ended.

After that, when recognition of the rack for the standard sample is found to have no problem, the control unit 7d transports the rack loaded with the accuracy control sample from the rack temporary storage unit 3 or 5 to the dispensing line 4, 6 or 8 of the analysis unit 2a, 2b or 2c and starts measurement of the accuracy control sample in the relevant analysis unit 2a, 2b or 2c.

On the other hand, if recognition of the rack for the standard sample is found to have a problem, the accuracy control sample temporarily waiting in the rack temporary storage unit 3 or 5 is transported to the loading/unloading unit 1 and taken out of the analyzer. This point is also the same as when the "DISPENSING OF SPECIMEN" field 504 or the "START OF ANALYSIS" field 505 is selected.

If the "DISPENSING OF SPECIMEN" field 504 is selected in Fig. 5, the control unit 7d transports only the standard sample to the dispensing line 4, 6 or 8 of the relevant analysis unit 2a, 2b or 2c and temporarily keeps the accuracy control sample waiting in the rack temporary storage unit 3 or 5 until specimen dispensing of the standard sample is completed in the analysis unit 2a, 2b or 2c.

After that, if it is found that there is no problem in operation to dispense the standard sample, the control unit 7d transports the rack loaded with the accuracy control sample from the rack temporary storage unit 3 or 5 to the dispensing line 4, 6 or 8 of the analysis unit 2a, 2b or 2c and starts measurement of the accuracy control sample in the relevant analysis unit 2a, 2b or 2c.

If the "START OF ANALYSIS" field 505 is selected in Fig. 5, the control unit 7d transports only the standard sample to the dispensing line 4, 6 or 8 of the relevant analysis unit 2a, 2b or 2c and temporarily keeps the accuracy control sample waiting in the rack temporary storage unit 3 or 5 until analysis of the standard sample is started in the analysis unit 2a, 2b or 2c.

After that, if it is found that there is no problem at the start of analysis of the standard sample, the control unit 7d transports the rack loaded with the accuracy control sample from the rack temporary storage unit 3 or 5 to the dispensing line 4, 6 or 8 of the analysis unit 2a, 2b or 2c and starts measurement of the accuracy control sample in the relevant analysis unit 2a, 2b or 2c.

As explained above, as the accuracy control sample is put in, the control unit 7d in this embodiment can decide whether or not the timing selected on the selection screen 501 has been reached and decide whether or not the standard sample has a problem.

In this case, if it is decided that the timing has been reached and there is no problem, the control unit 7d can start measurement of the accuracy control sample immediately, and if it is decided that the timing has not been reached, the control unit 7d can keep the accuracy control sample waiting in the rack temporary storage unit 3 or 5 until the timing selected on the selection screen 501 is reached.

Furthermore, regardless of whether or not the timing has been reached, if it is decided that the standard sample has a problem, the control unit 7d can stop the analysis of the accuracy control sample or take it out of the analyzer without making analysis.

Next, referring to Fig. 6 and Fig. 4, an explanation will be given of the flow to decide whether to measure the accuracy control sample according to the standard sample measurement circumstances in the modes shown in Fig. 5.

As shown in Fig. 6, first, when the accuracy control sample is put in after input of the standard sample and the racks in which they are loaded are recognized (Step S601), the control unit 7d also automatically generates a request for the accuracy control sample on the same item as the requested item for the standard sample (Step S602).

Then, the control unit 7d decides whether or not the "NOT SPECIFIED" field 502 is selected on the screen in Fig. 5 (S603).

If the "NOT SPECIFIED" field 502 is selected on the screen in Fig. 5 (YES at Step S603), the process goes to Step S604 and the control unit 7d starts dispensing of the standard sample and accuracy control sample (Step S604). Consequently, analysis of the standard sample and accuracy control sample is started (Step S605).

After that, the control unit 7d outputs the measurement result of the standard sample (Step S606) and then outputs the measurement result of the accuracy control sample using the measurement result of the standard sample (S607).

On the other hand, if the "NOT SPECIFIED" field 502 is not selected on the screen in Fig. 5 (NO at Step S603), the control unit 7d keeps the accuracy control sample waiting in the rack temporary storage unit 3 or 5 and decides whether or not the "RECOGNITION OF RACK" field 503 is selected on the screen in Fig. 5 (Step S608).

If the "RECOGNITION OF RACK" field 503 is selected on the screen in Fig. 5, the process goes to Step S401 in Fig. 4. On the other hand, if the "RECOGNITION OF RACK" field 503 is not selected on the screen in Fig. 5, the process goes to Step S609.

Then, the control unit 7d checks whether or not there is a problem in recognition of the rack for the standard sample (Step S609). Like Step S309 in Fig. 3, for example, there may be a case that the required specimen for measurement of the standard specimen is not available on the rack.

If it is found at Step S609 that there is a problem because there is a problem in recognition of the rack for the standard sample, the accuracy control sample waiting in the rack temporary storage unit 3 or 5 is unloaded (Step S617) and the process is ended by notifying the monitor 7a, etc. of occurrence of the problem.

If it is found at Step S609 that there is no problem, the control unit 7d makes the process go to Step S610 while keeping the accuracy control sample waiting in the rack temporary storage unit 3 or 5, and as dispensing of the standard sample is started (Step S610), the control unit 7d decides whether or not the "DISPENSING OF SPECIMEN" field 504 is selected on the screen in Fig. 5 (Step S611).

If the "DISPENSING OF SPECIMEN" field 504 is selected on the screen in Fig. 5, the process goes to Step S401 in Fig. 4. On the other hand, if the "DISPENSING OF SPECIMEN" field 504 is not selected on the screen in Fig. 5, the process goes to Step S612.

Then, the control unit 7d checks whether or not a problem has occurred during dispensing of the standard sample (Step S612). Like Step S311 in Fig. 3, for example, there may be a case that the specimen amount of the standard sample is insufficient or the specimen amount is insufficient for another item requested for the standard sample.

If it is found at Step S612 that there is a problem due to the problem during specimen dispensing of the standard sample, the accuracy control sample waiting in the rack temporary storage unit 3 or 5 is unloaded (Step S617) and the process is ended by notifying the monitor 7a, etc. of occurrence of the problem.

If it is found at Step S612 that there is no problem, the control unit 7d makes the process go to Step S613 while keeping the accuracy control sample waiting in the rack temporary storage unit 3 or 5, and as analysis of the standard sample is started (Step S613), the control unit 7d decides whether or not the "START OF ANALYSIS" field 505 is selected on the screen in Fig. 5 (Step S614).

If the "START OF ANALYSIS" field 505 is selected on the screen in Fig. 5, the process goes to Step S401 in Fig. 4. On the other hand, if the "START OF ANALYSIS" field 505 is not selected on the screen in Fig. 5, the process goes to Step S615.

Then, the control unit 7d checks whether or not a problem has occurred at the start of analysis of the standard sample (Step S615). Like Step S313 in Fig. 3, for example, there may be a case that the reagent or diluting fluid for use in measurement of the standard sample is insufficient or the amount of reagent becomes insufficient as the result of dispensing of the reagent.

If it is found at Step S615 that there is a problem because there is a problem at the start of analysis of the standard sample, the accuracy control sample waiting in the rack temporary storage unit 3 or 5 is unloaded (Step S617) and the process is ended by notifying the monitor 7a, etc. of occurrence of the problem.

On the other hand, if it is found at S615 that there is no problem, the process goes to Step S616 and then as the analysis result of the standard sample is output (Step S616), the control unit 7d makes the process go to Step S401 in Fig. 4.

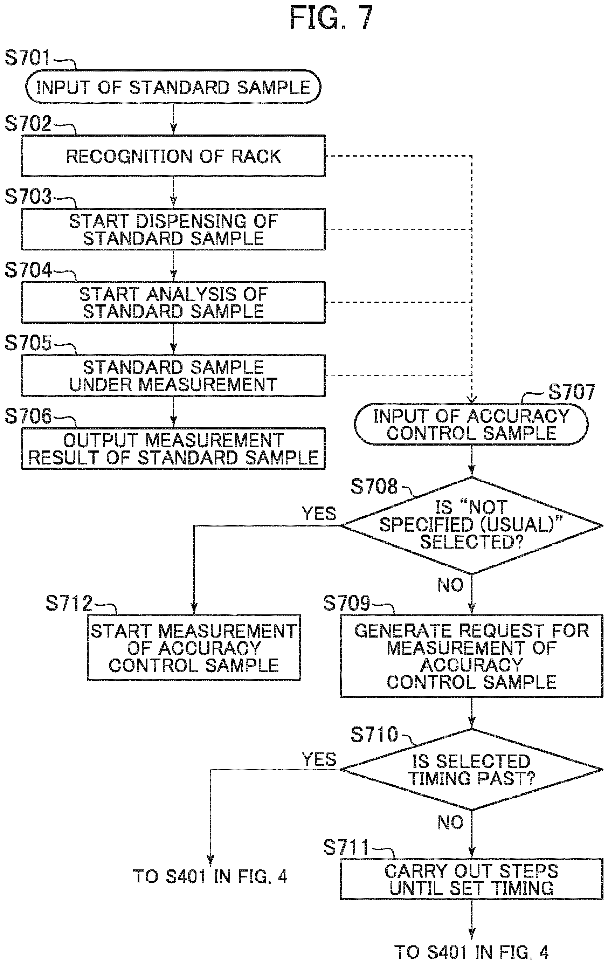

So far, referring to Fig. 2 to Fig. 6, an explanation has been made of the case that the accuracy control sample is put in successively after input of the standard sample. However, there is a case that the accuracy control sample is not put in successively after input of the standard sample. Next, control to deal with such a case will be explained referring to Fig. 7. Fig. 7 is a view that shows an example of the flow to automatically generate a request when the accuracy control sample is put in.

As shown in Fig. 7, when the standard sample is put in (Step S701), first the loading/unloading unit 1 recognizes the rack (Step S702) and dispensing of the standard sample (Step S703) and measurement of the standard sample (Step S704) are started, and the step in which the standard sample is under measurement (Step S705) and the step of completion of measurement of the standard sample (Step S706) are carried out.

In various steps such as S702, S703, S704, and S705, when the accuracy control sample is put in (Step S707), the loading/unloading unit 1 recognizes the rack for the accuracy control sample and the control unit 7d decides whether or not the "NOT SPECIFIED" field 502 is selected on the screen in Fig. 5 (Step S708).

If the "NOT SPECIFIED" field 502 is selected on the screen in Fig. 5, the control unit 7d makes measurement of the accuracy control sample on the item which has been requested for the accuracy control sample at the time of input of the accuracy control sample (Step S712).

On the other hand, if a field other than the "NOT SPECIFIED" field 502 is selected on the screen in Fig. 5, the control unit 7d automatically generates a request for measurement of the accuracy control sample on the same item as the requested item for the standard sample (Step S709).

Then, the control unit 7d decides whether or not the timing to measure the accuracy control sample as selected on the selection screen 501 in Fig. 5 is past the timing of input of the accuracy control sample (Step S707) (Step S710).

If the timing to measure the accuracy control sample as selected on the selection screen 501 in Fig. 5 is past the timing of input of the accuracy control sample, the process goes to Step S401 in Fig. 4.

On the other hand, if the timing to measure the accuracy control sample as selected on the selection screen 501 in Fig. 5 is not past the timing of input of the accuracy control sample, the control unit 7d keeps the accuracy control sample waiting in the rack temporary storage unit 3 or 5 until the selected timing and carries out other steps (Step S711). After that, when the set timing is reached, the process goes to Step S401 in Fig. 4.

After input of the standard sample, if an accuracy control sample that cannot be measured on the same item as the requested item for an ordinary specimen or the standard sample is put in, regardless of the set measurement timing it is desirable to start measurement without keeping it waiting, but it is also possible to keep it waiting.

The method for selecting the measurement timing is not limited to the selection screens 201 and 501 shown in Fig. 2 and Fig. 5, but the measurement timing can also be set by a definition file or through external communication from an external device or external terminal or by definition of registered standard sample parameters.

For example, if the measurement timing is set by a definition file, the setting as to whether the timing to measure the accuracy control sample is selectable or not may be added to the definition file such as an analyzer configuration file. In addition, the definition file can specify the measurement timing for accuracy control for each standard sample or each item. If the definition file is used, the user of the analyzer cannot make changes and the use of the functions can be restricted.

If the measurement timing is set through external communication from an external device or external terminal, the measurement timing of the accuracy control sample can be specified by the parameters downloaded through the external communication (measurement item, standard sample, accuracy control sample). This makes it possible that instead of decision by the user of the analyzer, the supplier of the parameters can specify the measurement timing according to the item or reagent.

Furthermore, if external communication is used, even when the measurement timing must be changed due to change in the parameters or reagent or the like, the measurement timing can be updated by downloading as necessary.

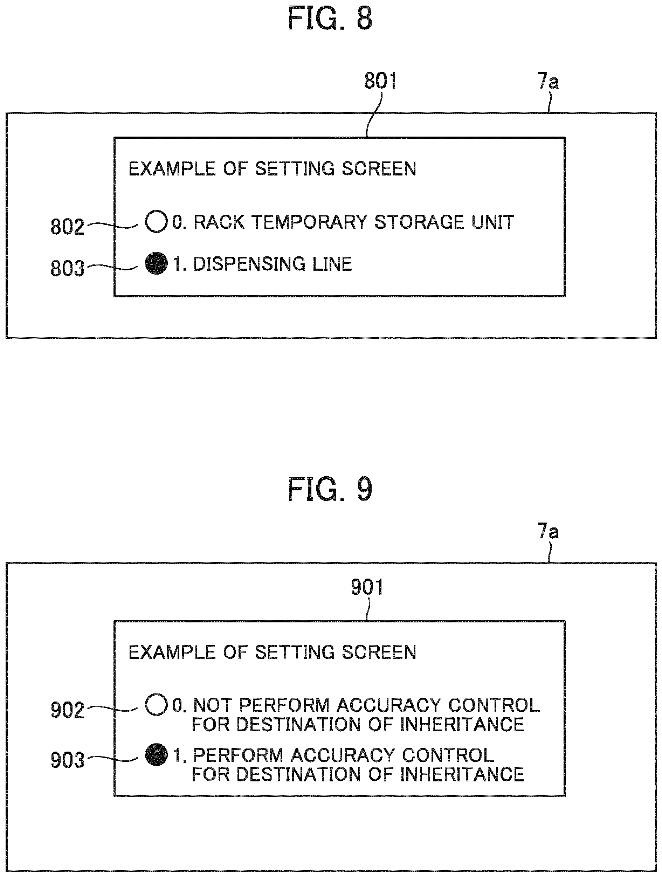

Next, a screen to set the waiting area for the accuracy control sample will be explained referring to Fig. 8. Fig. 8 is a view that shows an example of the temporary waiting area setting screen for the accuracy control sample.

The temporary waiting area setting screen 801 shown in Fig. 8 is a screen displayed on the monitor 7a and a screen that enables selection of one among a plurality of waiting areas as a waiting area for the specimen rack in which the accuracy control sample is placed under the above control.

For example, if the "RACK TEMPORARY STORAGE UNIT" field 802 is selected in Fig. 8, the control unit 7d makes the accuracy control sample waiting in the rack temporary storage unit 3 or 5 shown in Fig. 1. If the "DISPENSING LINE" field 803 is selected, the control unit 7d makes the accuracy control sample waiting in the dispensing line 4, 6, or 8 of the analysis unit 2a, 2b or 2c shown in Fig. 1.

The waiting areas shown in Fig. 8 are just an example and the selectable waiting areas are not limited as far as they structurally allow the accuracy control sample to wait.

Next, referring to Fig. 9, an explanation will be given of the screen to select whether or not to automatically generate a request for a reagent as a destination of inheritance as well when a request to enable measurement of the accuracy control sample on the same item as the requested item for the standard sample is automatically generated. Fig. 9 is a view that shows an example of the screen to select whether or not to require accuracy control for the destination of inheritance.

The accuracy control requirement setting screen 901 shown in Fig. 9 is a screen that enables selection as to whether or not to automatically generate a request for measurement of the accuracy control sample for the reagent to which the measurement result of the standard sample is inherited. If the "NOT PERFORM ACCURACY CONTROL FOR DESTINATION OF INHERITANCE" field 902 is selected, the control unit 7d automatically generates a request for the accuracy control sample only for the reagent requesting the standard sample and if the "PERFORM ACCURACY CONTROL FOR DESTINATION OF INHERITANCE" field 903 is selected, it automatically generates a request for the accuracy control sample for both the reagent requesting the standard sample and the reagent as the destination of inheritance.

Here, "inheritance" is a mechanism that enables the result of the standard sample measured with a given reagent to be used for another reagent that can be used for measurement on the same item. Here, the reagent that has been actually used to measure the standard sample is expressed as the source of inheritance and the reagent to which the measurement result of the standard sample with the source of inheritance is applied is expressed as the destination of inheritance.

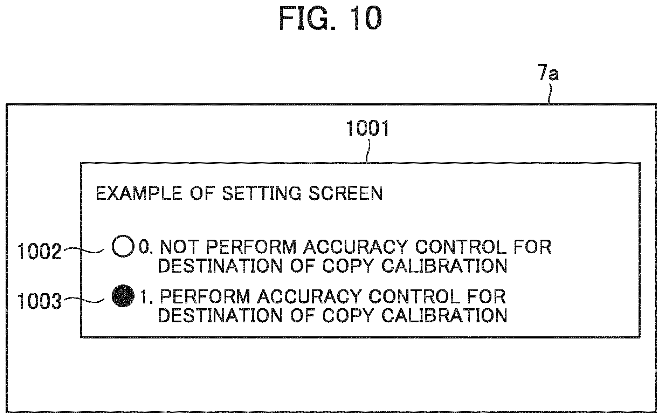

Next, referring to Fig. 10, an explanation will be given of the screen to select whether or not to automatically generate a request for the destination of copy calibration as well when a request to enable measurement of the accuracy control sample on the same item as the requested item for the standard sample is automatically generated. Fig. 10 is a view that shows an example of the screen to select whether or not to require accuracy control for the destination of copy calibration.

The accuracy control requirement setting screen 1001 shown in Fig. 10 is a screen that enables selection as to whether or not to automatically generate a request for measurement of the accuracy control sample for the reagent to which the measurement result of the standard sample is copied. If the "NOT POERFORM ACCURACY CONTROL FOR DESTINATION OF COPY CALIBRATION" field 1002 is selected, the control unit 7d automatically generates a request for the accuracy control sample only on the requested item for the standard sample.

If the "POERFORM ACCURACY CONTROL FOR DESTINATION OF COPY CALIBRATION" field 1003 is selected, the control unit 7d automatically generates a request for the accuracy control sample on both the requested item for the standard sample and the item as the destination of copy calibration.

Here, the item for the reagent which has been actually used to measure the standard sample is expressed as the source of copy calibration and another item for the same reagent to which the measurement result of the standard sample on the source of copy calibration is applied is expressed as the destination of copy calibration.

Next, the advantageous effects of this embodiment will be described.

The automatic analyzer 100 according to the above embodiment that analyzes a specimen includes: analysis units 2a, 2b, and 2c that make analysis of the specimen; a control unit 7d that controls operation of various devices in the analyzer including the analysis units 2a, 2b, and 2c and, when an accuracy control sample is put in after input of the standard sample, also requests measurement of the input accuracy control sample on the same item as the requested item for the standard sample; and a selection screen 201 or 501 that enables selection of timing to measure the accuracy control sample on the same item as the requested item for the standard sample. The control unit 7d starts measurement of the accuracy control sample when the timing selected on the selection screen 201 or 501 is reached.

This configuration allows the user to arbitrarily select the timing to measure the accuracy control sample according to the user's operation policy or the circumstances at that time, whether the user considers it important to prevent measurement of the accuracy control sample after a failure in measurement of the standard sample or puts importance on throughput without paying attention to wasting of the accuracy control sample and reagent. In other words, as compared with the existing automatic analyzers, the user can make a selection according to the operating conditions or the like, whether to reduce consumption of the standard sample and reagent or improve analysis throughput or adopt a balanced approach. Thus, usability is higher than with the existing analyzers.

Furthermore, since it is possible to select the measurement timing on the selection screen 501 from two or more timing options, the "COMPLETION OF ANALYSIS" field 506, "START OF ANALYSIS" field 505, "DISPENSING OF SPECIMEN" field 504, and "RECOGNITION OF RACK" field 503, the user of the analyzer can freely set the measurement timing and flexibly operate the analyzer according to the policy of the user of the analyzer.

Especially, since the timing to measure the accuracy control sample can be selected among the timing options, the time of rack recognition, specimen dispensing, start of analysis and completion of analysis, the need to wait for output of the measurement result of the standard sample is eliminated and measurement of the accuracy control sample is accelerated. In addition, it is the accuracy control sample measurable on the same item as the requested item for the standard sample that must wait during analysis of the standard sample and if the standard sample has a problem, measurement is stopped only for the accuracy control sample which is waiting, thereby reducing the influence on subsequent measurements more reliably. Thus, it is possible to achieve both reduction of wasting of the accuracy control sample and reagent and reduction of the operator's working hours that are required when measurement of the accuracy control sample is requested.

Furthermore, when the accuracy control sample is put in, the control unit 7d decides whether or not the timing selected on the selection screen 201 or 501 is reached and whether or not the standard sample has a problem, so the user can cope with a case that the accuracy control sample is not put in successively after input of the standard sample, which reduces the restrictions on operation of the analyzer and improves usability.

For example, even when the accuracy control sample is not put in successively after input of the standard sample, a request for measurement of the accuracy control sample which is put in later can be automatically generated on the same item as the requested item for the standard sample so that the accuracy control sample can be measured. This brings about an effect to reduce the operator's working hours.

In addition, when it is decided that the timing is reached and there is no problem, the control unit 7d can start measurement of the accuracy control sample immediately, so analysis can be made quickly and analysis throughput can be thus improved more reliably.

Furthermore, when it is decided that the timing is not reached, the control unit 7d keeps the accuracy control sample waiting in the rack temporary storage unit 3 or 5 until the timing is reached, so analysis can be made according to the user's operation policy more reliably.

In addition, regardless of whether or not the timing is reached, if it is decided that the standard sample has a problem, the control unit 7d can stop analysis of the accuracy control sample or takes the accuracy control sample out of the analyzer without making analysis, in order to ensure that the accuracy control sample and reagent are prevented from being consumed unnecessarily.

Furthermore, by automatically generating a request for measurement of the accuracy control sample for the reagent to which the measurement result of the standard sample is inherited, the control unit 7d can save the user from the trouble of making various settings upon each input of the accuracy control sample, so the analyzer can achieve higher usability.

In addition, the accuracy control requirement setting screen 901 that enables selection as to whether or not to automatically generate a request for measurement of the accuracy control sample is further provided for the reagent to which the measurement result of the standard sample is inherited, so analysis can be made more faithfully according to the user's operating circumstances.

Furthermore, the control unit 7d can achieve higher usability of the analyzer by automatically generating a request for measurement of the accuracy control sample for the reagent to which the measurement result of the standard sample is copied.

In addition, the accuracy control requirement setting screen 1001 that enables selection as to whether or not to automatically generate a request for measurement of the accuracy control sample is further provided for the reagent to which the measurement result of the standard sample is copied, and a plurality of waiting areas for the accuracy control sample to wait temporarily are provided and the temporary waiting area setting screen 801 that enables selection of a waiting area among the waiting areas for the accuracy control sample is further provided, so analysis can be made more faithfully according to the user's operating circumstances.

Furthermore, by selecting the measurement timing by the analyzer definition file, communication from an external device or external terminal or the registered parameter definition of the standard sample, a user who is unfamiliar with operation of the analyzer can avoid the need to make various settings and analysis can be made stably and more reliably and easily.

### <Other>

The present invention is not limited to the above embodiment but can be modified and applied in various ways. The above embodiment has been described in detail for easy understanding of the present invention and the invention is not limited to a configuration that includes all the constituent elements described above.

For example, the embodiment has been described above on the assumption that the analysis plan of the accuracy control sample is created after the timing set on the selection screen 201 or 501 is reached. However, alternatively, the analysis plan of the accuracy control sample may be created immediately after input of the accuracy control sample so that the plan is not carried out until the timing set on the selection screen 201 or 501 is reached, and upon reaching the timing set on the selection screen 201 or 501, the plan is carried out immediately or cancelled.

### List of Reference Signs

- 1...: loading/unloading unit
- 2a...: ISE analysis unit
- 2b...: biochemical analysis unit
- 2b1...: reaction disk
- 2c...: immunoanalytical unit
- 2c1...: incubator
- 3, 5...: rack temporary storage unit (waiting area)
- 4, 6, 8...: dispensing line (waiting area)
- 7...: operation unit PC (control unit)
- 7a...: monitor
- 7b...: input device
- 7c...: storage medium
- 7d...: control unit
- 9...: transport line
- 100...: automatic analyzer
- 201...: selection screen (selection unit)
- 202...: "NOT SPECIFIED" field
- 203...: "SUCCESSFUL MEASUREMENT OF STANDARD SAMPLE" field
- 501...: selection screen (selection unit)
- 502...: "NOT SPECIFIED" field
- 503...: "RECOGNTION OF RACK" field
- 504...: "DISPENSING OF SPECIMEN" field
- 505...: "START OF ANALYSIS" field
- 506...: "COMPLETION OF ANALYSIS" field
- 801...: temporary waiting area setting screen (waiting selection unit)
- 802...: "RACK TEMPORARY STORAGE UNIT" field
- 803...: "DISPENSING LINE" field
- 901...: accuracy control requirement setting screen (inheritance selection unit)
- 902...: "NOT PERFORM ACCURACY CONTROL FOR DESTINATION OF INHERITANCE" field
- 903...: "PERFORM ACCURACY CONTROL FOR DESTINATION OF INHERITANCE" field
- 1001...: accuracy control requirement setting screen (copy selection unit)
- 1002...: "NOT PERFORM ACCURACY CONTROL FOR DESTINATION OF COPY CALIBRATION" field
- 1003...: "PERFORM ACCURACY CONTROL FOR DESTINATION OF COPY CALIBRATION" field

## Claims

1. An automatic analyzer that analyzes a specimen, comprising:
an analysis unit that makes analysis of the specimen;
a control unit that controls operation of various devices in the analyzer including the analysis unit and when an accuracy control sample is put in after input of a standard sample, requests measurement of the input accuracy control sample on the same measurement item as a requested measurement item for the standard sample; and
a selection unit that enables selection of measurement timing of the accuracy control sample on the same item as the requested measurement item for the standard sample, wherein
the control unit starts measurement of the accuracy control sample when the timing selected by the selection unit is reached.

2. The automatic analyzer according to Claim 1, wherein
the selection unit enables selection of the measurement timing from two or more timing options that are time of completion of measurement of the standard sample, time of start of analysis of the standard sample, time of dispensing of the standard sample, and time of recognition of a rack in which the standard sample is placed.

3. The automatic analyzer according to Claim 1, wherein
the control unit decides whether or not the timing selected by the selection unit is reached when the accuracy control sample is put in, and decides whether or not the standard sample has a problem.

4. The automatic analyzer according to Claim 3, wherein
when it is decided that the timing is reached and there is no problem, the control unit starts measurement of the accuracy control sample immediately.

5. The automatic analyzer according to Claim 3, wherein
when it is decided that the timing is not reached, the control unit keeps the accuracy control sample waiting until the timing selected by the selection unit is reached.

6. The automatic analyzer according to Claim 3, wherein
when it is decided that the standard sample has a problem, regardless of whether or not the timing is reached, the control unit stops analysis of the accuracy control sample or takes the accuracy control sample out of the analyzer.

7. The automatic analyzer according to Claim 1, wherein
the control unit automatically generates a request for measurement of the accuracy control sample for a reagent to which a measurement result of the standard sample is inherited.

8. The automatic analyzer according to Claim 7, further comprising:
an inheritance selection unit that enables selection as to whether or not to automatically generate a request for measurement of the accuracy control sample for the reagent to which the measurement result of the standard sample is inherited.

9. The automatic analyzer according to Claim 1, wherein
the control unit automatically generates a request for measurement of the accuracy control sample for a reagent to which a measurement result of the standard sample is copied.

10. The automatic analyzer according to Claim 9, further comprising:
a copy selection unit that enables selection as to whether or not to automatically generate a request for measurement of the accuracy control sample for the reagent to which the measurement result of the standard sample is copied.

11. The automatic analyzer according to Claim 1, comprising:
a plurality of waiting areas in which the accuracy control sample is temporarily kept waiting,
and further comprising:
a waiting area selection unit that enables selection as to in which waiting area among the plurality of waiting areas the accuracy control sample is kept waiting.

12. The automatic analyzer according to Claim 1, wherein
the selection is made from an analyzer definition file or through communication from an external device or an external terminal.

13. The automatic analyzer according to Claim 1, wherein
the selection is made by a registered parameter definition of the standard sample.
